# EUROPÄISCHE PATENTSCHRIFT

(11) **EP 2 123 536 B1**
(45) Veröffentlichungstag und Bekanntmachung des Hinweises auf die Patenterteilung: **28.03.2012**
(21) Anmeldenummer: 08162849.7
(22) Anmeldetag: 22.08.2008
(51) Int. Cl.: B62B 7/08

(54) **Schiebewagengestell für Kinder- und/oder Puppenwagen**
Push carriage frame for children's or dolls' buggies
Châssis de chariot roulant pour un landau pour enfant et/ou poupée

(30) Priorität: 19.05.2008 DE 202008000058 U
(43) Veröffentlichungstag der Anmeldung: 25.11.2009
(60) Teilanmeldung: 12150903.8
(73) Patentinhaber: TFK Trends for Kids GmbH Vertrieb von Kinder-Trend-Artikeln, 84030 Ergolding (DE)
(72) Erfinder: Beger, Udo, 84034, Landshut (DE)
(74) Vertreter: Pröll, Jürgen

(56) Entgegenhaltungen:
- EP-A1- 1 466 810
- WO-A1-2006/116900
- WO-A1-2007/071141
- DE-U1-202007 014 299

## Beschreibung

Die Erfindung betrifft ein Schiebewagengespell für Kinder- und/oder Puppenwagen mit den in Anspruch 1 angeführten Merkmalen.

Ein Kinderwagengestell ist aus der EP 1 366 968 B1 bekannt. Das aufstellbare Spreizgestänge ist in Form eines Kreuzgestänges angegeben, das in einem bestimmten Abstand zum vorderen Verbindungsteil der obenseitigen seitlichen Gestellholme vorgesehen und derart ausgebildet ist, dass nach dem Aufstellen des Wagengestells die oberen und die unteren Gestellholme in eine V-Position sowohl zueinander als auch gegeneinander verbracht sind und beim Zusammenlegen des Spreizgestänges die oberen und unteren Holme gleichzeitig aufeinanderzu verschwenken. Die vorderen Holmenden sind dabei an einem Brückenteil schwenkbeweglich gelagert, so dass sie sich aufeinanderzu bewegen können. Ein solches Wagengestell ist nur für die Aufnahme von Sitzeinsätzen geeignet, also als Buggy verwendbar, nicht jedoch zur Aufnahme eines Liegewageneinsatzes, da der vorder- und/oder rückseitige Überstand zu einer Schwerpunktsverlagerung bei dem relativ kurzen Radabstand zwischen den Vorder- und Hinterrädern und damit zu einem Kippen in schrägen Fahrlagen führen könnte.

Um den Abstand zwischen den Hinterrädern und der Vorderradanordnung zu vergrößern, um auch Liegeeinsätze zwischen die beiden Seitenholme einfügen zu können, ist es aus der DE 20 2007 014 299 U1 bekannt, an einem Teleskoprohr vorderseitig eine Vorderradanordnung anzubringen und das Teleskoprohr in einem Profilrohr und am rückseitig vorstehenden Ende einen Träger für ein Spreizgestänge anzubringen. Jede der Spreizstangen ist mit dem zweiten Ende jeweils an einem oberen oder unteren Gestellholm befestigt. Das Teleskoprohr ist in einem Profilrohr verschiebbar gelagert, so dass beim Einschieben des vorderseitig überstehenden Teleskoprohres dieses mit dem vorderseitigen Radlagerhalter und den Rädern nach hinten geschoben werden kann. Dadurch wird der Träger nach hinten bewegt, was gleichzeitig ein Verschwenken der in Lagerausnehmungen am Träger schwenkbar gelagerten Stangen des Spreizgestänges bewirkt, so dass darüber ein Zusammenfalten des Kinderwagengestells ermöglicht wird. Diese Ausbildung hat den Nachteil, dass die schräg nach oben verlaufenden Gestellholme nicht über die gesamte Länge des Wagengestells für Adapter zur Aufnahme von Kinderwageneinsätzen, insbesondere Liegeeinsätze, zur Verfügung stehen. Die Kippsicherheit wird dann gewährleistet, wenn das Teleskoprohr vollständig ausgezogen ist, wodurch ein notwendiger Sicherheitsabstand zwischen den hinteren und vorderen Rädern gegeben ist. Um ein Umkippen des Fahrgestells durch den belegten Liegeeinsatz zu vermeiden, muss dieser so verlagert angebracht werden, dass er die Hinterräder nicht merklich übersteht. Des Weiteren ist, insbesondere wenn dieses Wagengestell auch für einen Kinderwagensitzeinsatz verwendet wird, die Teleskopstange mit dem sich daran befindlichen Vorderrad ein störendes Element.

Aus der EP 1 466 810 A1, welche den nächstliegenden Stand der Technik darstellt, ist ein Kinderwagengestell bekannt, bei dem ein Träger eines Spreizgestänges nach vorn verschiebbar auf einem Rohr angebracht ist, das als Trägerrohr vorgesehen ist. Der Träger ist nach vorn verschiebbar gelagert, so dass über die Spreizstangen die unteren Gestellholme, an denen rückseitig die Räder angebracht sind, in Richtung des Rohres sich verschwenken können. Dieses Kinderwagengestell weist im Übrigen auch obere schräg verlaufende Gestellholme auf, an denen über Rastkupplungen Schiebestangen angebracht sind. Die beiden Gestellholme sind über ein Verbindungsteil miteinander verbunden, an dem auch das Rohr befestigt ist. Ferner befindet sich an dem Verbindungsteil die im Wesentlichen senkrechte Achse einer Vorderradanordnung, die um diese Achse verdrehbar ist. Die beiden Schiebestangen, die in Verlängerung zu den Gestellholmen vorgesehen sind, sind auf die Gestellholme aufschwenkbar. Auch dieses Gestell ist nur als Kindersportwagen verwendbar, da die Achsabstände nicht ausreichend groß sind, um bei Einsatz eines überstehenden Liegeeinsatzes ein Umkippen, insbesondere bei Kurvenfahrten, zu vermeiden.

Die Patentschrift WO 2007/071141 A1, betrifft ein Kinderwagengestell. Dieses Kinderwagengestell umfasst zwei Hinterräder und ein Vorderrad, das an dem vorderen Ende einer durchgehenden Stange befestigt ist. Darüber hinaus ist ein Verschiebeelement auf der durchgehenden Stange geleitend gelagert. Dieses Verschiebeelement dient zum Zusammenlegen des Kinderwagengestells.

Die Patentschrift WO 2006/116900 A1 betrifft ein Kinderwagengestell. Dieses Kinderwagengestell umfasst zwei hintere Räder und ein Vorderrad , das an dem vorderen Ende einer durchgehenden und in der Länge nicht veränderbaren Stange angeordnet ist. Auf der durchgehenden Stange ist ein Verschiebeelement gleitend gelagert. Das Verschiebeelement dient ebenfalls zum Zusammenlegen des Kinderwagens.

Ausgehend vom dargestellten Stand der Technik liegt der Erfindung die Aufgabe zugrunde, ein Wagengestell mit einem solchen Aufbau anzugeben, dass der Radabstand zwischen Vorderradanordnung und Hinterradanordnung im aufgestellten Zustand wahlweise veränderbar ist oder sich automatisch vergrößert und im zusammengelegten Zustand wahlweise verringerbar ist oder sich automatisch verkleinert und ein Verstaugebinde entsteht, das besonders klein ist, und dennoch sichergestellt ist, dass auch ein Liegeeinsatz zwischen die beiden Seitenholme zwischengefügt werden kann, ohne dass die Gefahr der vorderseitigen oder rückseitigen Schwerpunktsverlagerung besteht und damit eine Kippgefahr bei Befahren von schrägen Fahrstrecken oder engen Kurven gegeben ist.

Die Erfindung löst die Aufgabe durch Ausgestaltung des zusammenklappbaren Schiebewagens gemäß der im Anspruch 1 angegebenen technischen Lehre.

Der Schiebewagen nach der Erfindung zeichnet sich dadurch aus, dass das mindestens eine vordere Lagerelement für die mindestens eine Vorderradanordnung an dem vorderen Ende einer Teleskopstange befestigt ist, die in einer im Querschnitt angepassten Innenlängsführung im Profilrohr zur Veränderung des Radachsenabstandes zwischen den Hinterrad- und den Vorderradachsen verschiebbar gelagert ist und mindestens in einer vorgezogenen Position arretierbar ist. Hierdurch wird erreicht, dass unabhängig von den Lagerungen und Befestigungsarten der Gestellholme und des Spreizgestänges der Abstand zwischen Vorderradachsen und Hinterradachsen individuell einstellbar ist. Normalerweise wird die Teleskopstange mit dem daran befindlichen Vorderrad oder Vorderradanordnung im aufgestellten Zustand des Wagengestells vorgezogen, so dass in gewünschter Weise ein ausreichender Abstand zwischen den vorderen und hinteren Achsen besteht. Es können selbstverständlich aber auch Zwischenpositionen eingenommen werden, in denen die Teleskopstange an dem Profilrohr fixiert werden muss, um einen Schiebebetrieb zu ermöglichen. Im eingezogenen Zustand ist die gewünschte Verkürzung gegeben, um das Gestell im zusammengelegten Zustand in eine möglichst kleine Verstaueinheit verbringen zu können. Die Arretierung der Teleskopstange in oder an dem Profilrohr erfolgt mit bekannten Arretierungszapfen, die beispielsweise federbelastet durch kongruente Bohrungen in beiden Teilen greifen.

Die Erfindung ist grundsätzlich auf alle Schiebewagengestelle anwendbar, die untere hintere Gestellholme oder untere, nach unten aufgestellte oder sich aufstellende Stützholme aufweisen, die miteinander oben- und/oder untenseitig verbunden sind oder über einen zwischen obenseitig befestigten oder angelenkten Schiebestangen eingesetzten Einsatz auf Abstand gehalten werden. An den unteren Enden der unteren Gestell- oder Stützholme sind Lagerelemente für seitliche hintere Räder vorgesehen. Mit dieser Anordnung ist mindestens ein nach vorne vorstehendes Profilrohr verbunden, an dessen Ende ein Lagerelement für mindestens ein Vorderrad vorgesehen ist. Anstelle eines einzelnen Profilrohres können auch beabstandet zueinander zwei solche Profilrohre vorgesehen sein, die starr mit den Stützholmen oder unteren Holmen verbunden sind oder auch federelastisch und jeweils Lagerelemente für je eine Vorderradanordnung oder ein Vorderrad aufweisen. Anstelle eines einzelnen Vorderrades bei einer Ausführung mit nur einem Profilrohr kann auch ein Brückenträger zum Einsatz kommen, an dessen seitlichen Enden einzelne Vorderradanordnungen gelagert sind. Die in das Profilrohr einschiebbare Teleskopstange bzw. in die Profilrohre einschiebbaren Teleskopstangen, an deren vorderem Ende bzw. vorderen Enden die Lagerelemente für die Vorderräder nach der Erfindung angebracht sind, können wahlweise vorgezogen oder auch eingeschoben werden. Die Erfindung ist auch auf solche Wagengestelle anwendbar, bei denen an den unteren Gestellholmen, die V-förmig an einem Profilrohr befestigt sind, Stützholme schwenkbeweglich angelenkt sind, an deren oberen Enden Gestellholme mit Schiebestangen klappbar oder starr verbunden sind, die miteinander über einen Querholm verbunden sind, der sich mit einer starren oder federnden Stütze an dem Profilrohr abstützt. Bei einer solchen Ausführung ist in der Regel nur ein Profilrohr vorgesehen. Auch können die Stützholme die seitlichen Abschnitte eines geraden oder gebogenen Brückenelementes sein.

Um ein automatisches Verändern des Radabstandes beim Zusammenlegen zu ermöglichen, sieht Anspruch 2 vor, dass die zwei unteren spiegelbildlich angeordnete Gestellholme aus von vorn nach hinten im Wesentlichen V-förmig verlaufende, durchgehende oder aus miteinander verbundenen Abschnitten gebildete Gestellholme sind, an deren hinteren Enden Lagerelemente für hintere Räder oder Räderanordnungen befestigt sind, dass ein aufstellbares Spreizgestänge vorgesehen ist, das mindestens zwei obere Spreizstangen aufweist, die seitlich nach oben abstehend verlaufen und untenseitig schwenkbar gelagert und mit ihren oberen Enden schwenkbeweglich mit den oberen Gestellholmen direkt oder indirekt verbunden sind, dass das Verbindungsteil an der mindestens einen Teleskopstange vorderseitig befestigt ist, dass das Profilrohr Schwenklager für die unteren schwenkbaren Gestellholme aufweist, dass auf dem Profilrohr verschiebbar und mindestens in der hinteren Verschiebeposition, in der das Wagengestell aufgestellt ist, mindestens ein arretierbarer Träger für das Spreizgestänge gelagert ist, dass an dem Träger verschwenkbar zwei untere Stützholme seitlich nach unten abstehend verlaufend angelenkt sind, die mit ihren unteren Enden an den unteren Gestellholmen im hinteren Bereich verschwenkbar angelenkt sind, und/oder an beiden oberen Spreizstangen oder ein daraus gebildeter Bügel angelenkt ist bzw. sind, und dass nach der Entriegelung der Arretierung des Trägers beim Verbringen des Wagengestells aus der Gebrauchsstellung in die zusammengeklappte Verstaustellung durch Vorschieben des Trägers auf dem Profilrohr das Spreizgestänge mindestens nach hinten schwenkt.

Grundsätzlich können eine Teleskopstange und ein Profilrohr vorgesehen sein, in die die Teleskopstange einschiebbar ist. Es ist aber auch möglich, zwei Profilrohre beispielsweise durch ein Brückenteil miteinander zu verbinden und diese parallel zueinander oder hinten V-förmig aufeinanderzu verlaufend vorzusehen und hierin zwei Teleskopstangen verschiebbar einzuführen. In diesem Fall sollte dafür Sorge getragen werden, dass das Verbindungsteil zur Aufnahme der Holme beide Teleskopstangen miteinander verbindet und auch der Träger auf beiden Profilrohren oder auf einer zwischengefügten Schiene verschiebbar angelagert ist. Diese Ausführung hat den Vorteil, dass anstelle eines breiten Vorderradträgers, der an einer Stange angebracht ist, und zwei beabstandet zueinander angeordnete Radlager aufweist, an den vorderen Enden der Teleskopstangen jeweils eine Radanordnung direkt angebracht werden kann, wenn das Schiebewagengestell vorne zwei Räderanordnungen aufweisen soll. Des Weiteren ist es nicht erforderlich, dass die oberen Spreizstangen und die unteren Spreizstangen des Spreizgestänges sowohl vertikal als auch horizontal verschwenkbar gelagert sein müssen. Sie können auch jeweils bügelförmig zusammengefasst sein und nur in vertikaler Richtung verschwenkbar gelagert sein. Dann ist allerdings das Gestell in horizontaler Richtung nicht zusammenschwenkbar, sondern nur in vertikaler Richtung.

Der erfindungsgemäße Aufbau gestattet eine Ausführungsform, bei der die oberen Holme und die unteren Holme in der seitlichen Spreizstellung sowohl im aufgestellten Zustand des Fahrgestells auch im zusammengelegten Zustand verbleiben, wenn die oberen Holme und die unteren Holme derart an horizontalen, quer zur Längsachse des Fahrgestells verlaufenden Schwenklagern angelenkt sind und fest miteinander verbunden sind, dass ein Aufeinanderzuschwenken der Schenkel nicht möglich ist. In diesem Fall müssen auch die Stützholme am Träger so gelagert sein, dass keine einziehende Kraft auf die unteren Holme ausgeübt wird. Die Stützholme sind dann in Form einer Brücke miteinander verbunden und werden lediglich nach hinten aus den Aufnahmen im Träger mit ihren oberen Enden ausgeschwenkt, während das verbindende Brückenteil im Träger schwenkbeweglich befestigt ist. Ebenso müssen die Spreizstangen in dieser Ausführung U- oder V-förmig fest miteinander verbunden sein und dürfen sich nicht aufeinanderzu bewegen, wenn sie aus den Lagerschalen in dem Träger ausschwenken. Das Brückenteil dieser Spreizstangen bleibt auch im Träger schwenkbar um eine horizontale Achse gelagert. Wenn die oberen Holme jedoch schwenkbeweglich an dem Verbindungsteil befestigt sind und die Spreizstangen, die Stützholme und die unteren Holme, die vorzugsweise von vorn schräg nach hinten verlaufen, schwenkbeweglich gelagert sind, so kann durch Lagerung der Spreizstangen und der Stützholme in den Einzellagerstellen durch entsprechende Auslegung der Gelenke und der Bemessung der Elemente erreicht werden, dass beim Vorschieben des Trägers automatisch das Gestell auch in seitlicher horizontaler Richtung, also nicht nur in vertikaler Richtung, zusammenfährt. Dadurch kann das Verstauvolumen des Fahrgestells nochmals verkleinert werden.

Gemäß der im kennzeichnenden Teil des Anspruchs 3 angegebenen Lehre zeichnet sich ein zusammenklappbarer Schiebewagen dadurch aus, dass die zwei unteren spiegelbildlich angeordnete Gestellholme aus von vorn nach hinten im Wesentlichen V-förmig verlaufende, durchgehende oder aus miteinander verbundenen Abschnitten gebildete Gestellholme sind, an deren hinteren Enden Lagerelemente für hintere Räder oder Räderanordnungen befestigt sind, dass ein aufstellbares Spreizgestänge vorgesehen ist, das mindestens zwei obere Spreizstangen aufweist, die seitlich nach oben abstehend verlaufen und untenseitig schwenkbar gelagert und mit ihren oberen Enden schwenkbeweglich mit den oberen Gestellholmen direkt oder indirekt verbunden sind, dass das Verbindungsteil an mindestens einer Teleskopstange vorderseitig und um eine horizontale Achse eines Schwenklagers schwenkbeweglich befestigt ist, dass das Profilrohr Schwenklager oder Befestigungspunkte für die unteren schwenkbaren oder bügelförmig starr ausführbare Gestellholme aufweist, dass an dem Profilrohr oder an einem Brückenelement zwischen den unteren Holmen die beiden oberen Spreizstangen oder das Brückenelement mit den beiden oberen Spreizstangen oder die beiden oberen Spreizstangen direkt an den unteren Holmen schwenkbeweglich gelagert sind, dass das Profilrohr als Träger in der hinteren Verschiebeposition, in der das Wagengestell aufgestellt ist, mittels einer lösbaren Arretiereinrichtung an der Teleskopstange fixiert ist, und dass an der Teleskopstange vorderseitig das Lagerelement für die Vorderradanordnung vorgesehen ist, wobei nach der Entriegelung der Arretiereinrichtung beim Verbringen des Wagengestells aus der Gebrauchsstellung in die zusammengeklappte Verstaustellung durch Vorschieben des Profilrohres auf dem Teleskoprohr die oberen Spreizstangen mindestens nach hinten über die unteren Gestellholme schwenken und die mitgekoppelten oberen Gestellholme in Richtung der Ebene der Teleskopstange und der des Profilrohres verschwenken.

Gemäß dieser technischen Lehre ist ein Träger, der auf dem Profilrohr verschiebbar gelagert ist, nicht erforderlich. Das Profilrohr selbst kann als Träger verwendet werden und ist auf dem Teleskoprohr verschiebbar angeordnet. Wenn das Gestell nicht seitlich zusammengelegt werden soll, können die unteren Holme fest an dem relativ kurz ausgebildeten Profilrohr an Fixpunkten befestigt sein. Dabei können die unteren Holme horizontal oder aber auch in einem schrägen Winkel nach hinten unten verlaufen. Die beiden Enden der unteren Holme können über eine Achse miteinander verbunden sein, auf deren vorstehenden Naben die hinteren Räder aufsteckbar sind. Die Spreizstangen sind in diesem Fall ebenfalls miteinander starr verbunden ausgeführt und können, je nach baulicher Anordnung, an einem Schwenklager an dem Profilrohr oder an einem schwenkbar gelagerten Brückenteil, das an den unteren Holmen beabstandet zu der hinteren Achse im vorderen Bereich angeordnet sind, angelenkt sein. Das Brückenteil ist erforderlich, da beim Verschwenken in die Verstauposition automatisch die über die oberen Holme sich mit bewegende Teleskopstange in das Profilrohr geschoben wird. Im Übrigen muss im aufgestellten Zustand eine Arretierung dafür Sorge tragen, dass sich die Teleskopstange, die auch ein Rohr sein kann, nicht in dem Profilrohr verschieben lässt. Ist hingegen ein seitliches Einschwenken der hinteren Räder gekoppelt mit dem Einschwenken der oberen und unteren Holme sowie der Spreizstangen gewünscht, so müssen diese jeweils um Schwenklager schwenkbar an dem Verbindungsteil, dem Brückenteil und an dem Profilrohr um solche Achsen verschwenkbar angelenkt sein, damit sie bei Vorschieben des Profilrohres auf der Teleskopstange auch seitlich zusammenfahren können. Gleichzeitig wird das Gestell auch in vertikaler Richtung zusammengefahren. Das Wirkungsprinzip beider baulicher Anordnungen ist gleich. Die oberen Holme schwenken stets in Richtung der unteren Gestellholme bzw. in Richtung der Teleskopstange und des Profilrohrs.

Das vorderseitige Verbindungsteil, an dem die beiden seitlichen Gestellholme, die schräg ansteigend im aufgestellten Zustand des Wagengestells verlaufen, befestigt sind, ist dabei an einer Teleskopstange vorderseitig befestigt. Die Teleskopstange selbst ist in einem Profilrohr mit im Querschnitt angepasster Innenlängsführung geführt. Die Teleskopstange muss so lang ausgebildet sein, dass ein Abschnitt sich bei vorgezogenen Zustand noch im Profilrohr befindet. Die Längen des Profilrohres und der Teleskopstange können jedoch so aufeinander abgestimmt sein, dass auch im zusammengeschobenen Zustand die Teleskopstange noch im Profilrohr verbleibt oder rückseitig austritt. Des Weiteren ist in an sich bekannter Weise auf dem Profilrohr verschiebbar und mindestens in der hinteren Position arretierbar der Träger für das Spreizgestänge gelagert, das über obere Stützholme die seitlichen Gestellholme trägt und untenseitig die unteren Stützholme, die mit ihren Enden an den Endbereichen der untenseitig vorgesehenen, von vorn nach hinten V-förmig schräg spreizend nach unten verlaufenden Gestellholme angelenkt sind. Die Lager sind so positioniert und auf die Form der Stützholme und Spreizstangen abgestimmt, dass beim Vorschieben des Trägers durch Ausschwenken der unteren Stützstangen aus den Lagerausnehmungen des Trägers diese automatisch eingezogen werden, wodurch die unteren Gestellholme aufeinanderzu verschwenken, so dass die außenseitig vorgesehenen Räder im zusammengelegten Zustand des Fahrgestells einen geringeren Abstand als im aufgestellten Zustand aufweisen.

Die obenseitig vorgesehenen Stützholme können verschiedenartig ausgeformt sein. Beispielsweise ist es möglich, diese so zu biegen, dass sie U-förmig, V-förmig oder parabelförmig verlaufen. Die Schwenklager können als Drehlager in Lagerschalen des Trägers nahezu horizontal verlaufend vorgesehen sein. Dadurch bleibt der Abstand der seitlichen schrägen Gestellholme, die heruntergeschwenkt werden, wenn der Träger nach vorne bewegt wird, erhalten. Die seitlichen Gestellholme können seitlich die hinteren Räder im eingezogenen Zustand übergreifen. Diese U-Form kann auch durch eine γ-förmige Ausbildung der Stützholme realisiert werden, beispielsweise kann die Mittensäule der Y-Form an dem Träger nach hinten schwenkbeweglich befestigt sein und die beiden seitlichen Arme mit ihren nach oben sich erstreckenden Schenkeln an den Schwenklagern an den seitlichen oberen Gestellholmen oder an Schwenklagern an Haltern befestigt sein, die an den Gestellholmen nach unten abstehend vorgesehen sind. Diese Halter können aber auch an den in Verlängerung zu den Holmen vorgesehenen Schiebestangen im unteren Bereich vorgesehen sein.

Die Schiebstangen können, wie dies auch bekannt ist, durch Rastkupplungen an den Enden der Holme befestigt und so nach vorne verschwenkbar ausgeführt sein. Das so ausgebildete Wagengestell lässt sich in der Form zusammenklappen, dass durch Vorschieben des Trägers die unteren Gestellholme, die mit den vorderen Enden an dem Profilrohr befestigt sind, zusammenfahren und durch das Vorschieben des Trägers zugleich das Teleskoprohr in das Profilrohr hineingeschoben wird, so dass sich das Wagengestell automatisch verkürzt, wobei die Längen der schräg nach oben verlaufenden Holme und der unteren Holme so gewählt sind, dass im zusammengeklappten Zustand die hinteren Räder in Höhe der Rastkupplungen an den Schiebestangenenden liegen. Die Schiebestange, die auch die Gesamtlänge des zusammengelegten Gestells mitbestimmt, kann nach vorne umgelegt werden.

Es hat sich gezeigt, dass durch diese Ausführung das Wagengestell so klein zusammengelegt werden kann und dennoch für große Liegewageneinsätze, wie sie für Babys verwendet werden, einsetzbar ist, ohne dass eine Kippgefahr bei ansteigender Fahrstrecke besteht, dass das Gestell auch im Kofferraum eines Cabriolets oder eines Sportwagens untergebracht werden kann, ohne dass die Räder abgenommen oder andere Teile zerlegt oder abgenommen werden müssen. Andererseits wird ein gekoppeltes Aufstellen ermöglicht, zu welchem Zweck die Schiebestangen zurückgeklappt und in die Verlängerungspositionen zu den Gestellholmen bei gleichzeitigem Gegendruck auf die hinteren Räder verschwenkt werden, wodurch eine Aufstellbewegung aller Elemente ausgelöst wird. In der Endaufstellposition sorgt eine Arretierungseinrichtung an dem Träger dafür, dass das Gestell aufgestellt bleibt. Eine solche Arretiereinrichtung ist auf einfachste Weise durch einen Schieber realisierbar, der senkrecht in dem Träger geführt ist und mit einem Bolzen in eine Bohrung des Profilrohres eintaucht. Befindet sich der Schieber vorderseitig am Träger, also in Richtung des Vorderrades, so kann durch entsprechende Längenausbildung des Teleskoprohres dieses gleichzeitig und zusätzlich durch Eintauchen des Bolzens in eine korrespondierende Bohrung in der Teleskopstange mit arretiert werden, was aber grundsätzlich nicht erforderlich ist. Durch die Schiebelagerung der Teleskopstange in dem Profilrohr ist eine dämpfende Nachgiebigkeit gegeben, die Stoßbelastungen auf die Vorderradanordnung dämpft. Dies kann durch Abdichten des Teleskoprohres gegenüber dem Profilrohr noch verstärkt werden, da dadurch die Luftsäule innerhalb des Profilrohres zur Dämpfung genutzt werden kann. Die Teleskopstange und auch alle anderen Holme, Stützen und Stangen sind üblicherweise Profilrohre, z.B. Aluminium-Rohre mit runden, ovalen oder eckigen Querschnitten.

Das Verbindungsteil, das die oberen Gestellholme verbindet, kann als Kunststoffteil ausgebildet sein und zugleich auch das Lagerelement für eine Vorderradanordnung aufweisen. Die Vorderradanordnung kann aus einer Einzelrad-, einer Doppelrad- oder auch einer beabstandeten Vorderradanordnung bestehen. Die entsprechenden Lager sind entweder mittig oder an dem Verbindungsteil außenseitig oder an einem gesonderten Brückenteil außenseitig anzubringen, welches auch Bestandteil des Verbindungsteils sein kann. Auch kann anstelle eines Lagerelementes für eine Einzelvorderradanordnung verdrehgesichert ein Brückenelement angebracht sein, an dessen beiden Seiten Vorderräder schwenkbeweglich um Vertikalachsen drehend angebracht sind, die in bekannter Weise auch eine Kurvenfahrt auf einfache Weise ermöglichen, sich aber auch feststellen lassen. Dieses Prinzip ist von Transportrollen mit senkrechten Drehlagern schlechthin bekannt. Die Hinterräder sind einzeln an Lagerelementen an den unteren Gestellholmen drehbar gelagert. Anstelle einzelner Schiebestangen mit daran befindlichen Einzelschiebern kann aber auch ein Schiebebügel die beiden oberen Schiebestangen miteinander verbinden. Im Falle der gegenläufigen Verschwenkbarkeit der oberen Gestellholme muss der Schiebebügel geteilt ausgeführt sein oder die Schenkel durch Rastkupplungen schwenkbar miteinander verbunden sein, um auch die Schiebestangen gegenläufig verschwenken zu können.

Des Weiteren ist es auch möglich, durch Ausbildung und Lagerung der oberen Stützholme dafür Sorge zu tragen, dass beim Zusammenfahren, also beim Verschwenken der Stützholme in den Lagerstellen des Trägers, die Holme aufeinanderzu bewegt werden. Zu diesem Zweck sind die Holme dann nicht nur um eine horizontale, sondern auch um eine vertikale Achse bzw. um ein kombiniertes Gelenk schwenkbar gelagert, um bei gleichzeitigem Aufeinanderzufahren der beiden Seitenholme auch ein Absenken zu ermöglichen. In entsprechender Weise sind die Stützholme dann einzeln auszubilden und zu lagern und auch die Lagerung in dem Träger anzupassen. In dieser Ausführung empfiehlt es sich, eine Anordnung eines Kreuzgestänges zu wählen, wie es in der EP 1 366 968 B1 beschrieben ist. Die vorteilhaften Ausgestaltungen des zusammenklappbaren Schiebewagens nach der Erfindung sind im Detail in den Unteransprüchen angegeben.

Als vorteilhaft hat es sich ebenfalls erwiesen, die Teleskopstange so auszulegen, dass sie beim Einschieben in das Profilrohr eine Federanordnung oder eine Gasdruckfeder in dem Profilrohr oder daran befestigt spannt, die in der gespannten Stellung arretierbar ist und nach dem Lösen der Arretierung die Teleskopstange automatisch vorschiebt. Die Federanordnung oder die Gasdruckfeder unterstützt dabei das Aufstellen des Wagengestells.

Eine Federanordnung, beispielsweise eine Druckfeder, die in das Profilrohr eingesetzt ist und sich am Boden abstützt, kann ferner dazu verwendet werden, um Stöße, die in Längsrichtung auf die Teleskopstange wirken, abzufedern bzw. so zu dämpfen, dass die Stoßenergie nicht auf das gesamte Wagengestell übertragen wird. Dies ist beispielsweise dann gegeben, wenn mit dem Vorderrad gegen eine Bordsteinkante eines Gehweges gefahren wird.

Das Verbindungsteil, das die oberen, schräg nach oben verlaufenden Holme miteinander verbindet, kann auch längs verschieblich auf einer Teleskopstange oder auf einer Anordnung aus zwei Teleskopstangen oder an einer dazwischen vorgesehenen Schiene angebracht sein. Wenn das Wagengestell aufgestellt ist und der Träger für das Spreizgestänge beispielsweise arretiert ist, wird automatisch auch die Teleskopstange in dem Profilrohr in der ausgeschobenen Position gehalten. Es kann aber auch eine zusätzliche Fixierung des Verbindungsteiles auf der Teleskopstange vorgesehen sein, damit das Verbindungsteil im aufgestellten Zustand des Wagengestells im vorderen Bereich der Teleskopstange befestigt ist. Durch die verschiebliche Anordnung auf der Teleskopstange kann die Teleskopstange vorderseitig noch weiter herausgezogen werden, wenn die Abmessungen des Profilrohres und der Teleskopstange aufeinander abgestimmt sind, so dass eine noch größere Stabilität auch bei äußerst kleiner Ausführung des Wagengestells beim Gebrauch und eine hohe Kippsicherheit, insbesondere in Längsrichtung, gegeben ist.

Das Verbindungsteil und das Lagerelement können als ein einziges Element z. B. aus Kunststoff gefertigt sein. Die Lagerstellen für die Gestellholme mit den ausgerichteten Schwenkachsen können dabei angeformte Lagerstellen sein.

Des Weiteren können die oberen Spreizstangen ebenfalls V-förmig verlaufen und am Träger einzeln angelenkt sein. Die unteren Gestellholme und die Stützholme können ebenfalls aufeinanderzu schwenkbeweglich gelagert sein, so dass alle schwenkbar gelagerten Teile beim Zusammenfahren des Schiebewagengestells mitgezogen werden und sich aufeinanderzu bewegen. Die hinteren oberen Spreizstangen können aber auch U-förmig verlaufend ausgebildet und starr miteinander verbunden und gemeinsam oder einzeln schwenkbeweglich an dem Träger oder an dem Profilrohr oder an einem Brückenelement oder an den unteren Holmen angelenkt sein. Auch können die Y- oder T-förmigen Träger solche einzelnen Teile des Spreizgestänges ersetzen.

Die Erfindung wird nachfolgend anhand des in den Zeichnungen dargestellten Ausführungsbeispiels der verschiedenen Aufstellpositionen des Kinderwagengestells ergänzend erläutert.

In den Zeichnungen zeigen:
- Fig. 1: eine perspektivische Darstellung eines Wagenge- stells nach der Erfindung,
- Fig. 2: das in Fig. 1 dargestellte Wagengestell mit vorgeschwenkten Schiebestangen,
- Fig. 3: das in Fig. 1 dargestellte Wagengestell in ei- ner Darstellung, bei der die Hinterräder einge- zogen sind,
- Fig. 4: ein gänzlich zusammengefaltetes Wagengestell,
- Fig. 5: eine perspektivische Darstellung eines Wagenge- stells in einer anderen nicht erfindungsgemäßen Aus- führungsvariante als in den vorhergehenden Fi- guren im aufgestellten Zustand,
- Fig 6: das in Fig. 5 dargestellte Wagengestell in ei- ner teil-zusammengeklappten Darstellung und
- Fig. 7: das in den Fig. 5 und 6 angegebene Beispiel ei- nes Fahrgestells im vollständig in vertikaler Richtung zusammengeklappten Zustand.

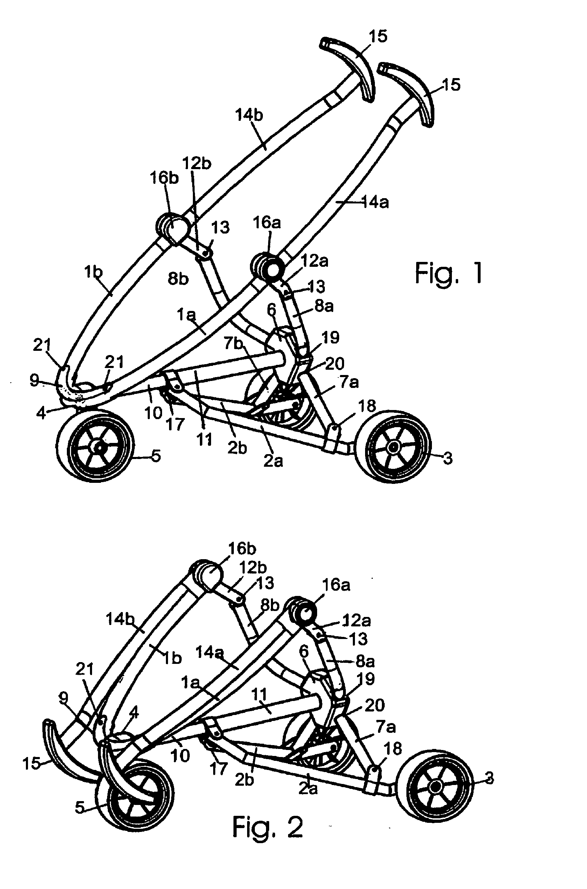

Das in den Figuren 1 bis 4 in der Perspektive dargestellte Wagengestell besteht aus symmetrisch zur Mittenachse angeordneten Gestellholmen 1a, 1b, die von unten nach oben, wie aus Fig. 1 ersichtlich, in der Gebrauchsstellung schräg verlaufen. Diese Gestellholme 1a, 1b können in der Vorderansicht z. B. geradförmig, V-förmig, parabelförmig, wie ersichtlich, oder teilellipsenförmig ausgeformt sein. Dies hängt jeweils von der Gestaltung ab. Die beiden Gestellholme 1a, 1b können unten direkt über ein Bogenelement miteinander starr verbunden sein, wenn der Abstand sowohl im aufgestellten als auch im abgesenkten Zustand gewünscht ist, oder über ein Verbindungsteil 9, bzw. können die unteren Enden der Gestellholme 1a, 1b in einem Verbindungsteil 9 um eine horizontale Achse einerseits und um eine weitere senkrecht hierzu verlaufende Achse andererseits schwenkbeweglich befestigt sein. Dieses Verbindungsteil 9, z. B. aus Kunststoff gefertigt, kann zugleich auch Vorrichtungen zur Aufnahme eines Lagerelementes 4 für ein Vorderrad 5 aufweisen. Des Weiteren kann das Verbindungsteil auch Lagermöglichkeiten zur Fixierung der erfindungsgemäß vorgesehenen Teleskopstange 10 aufweisen, die an dem Verbindungsteil 9 befestigt ist.

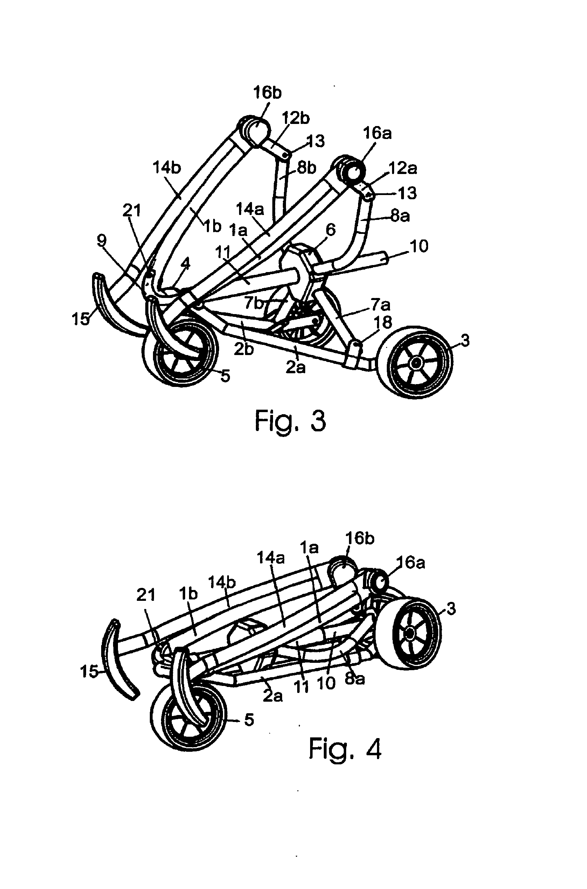

Die Teleskopstange 10 ist in einem Profilrohr 11 geführt, das, wie aus Fig. 1 ersichtlich, etwas länger ausgebildet ist als der vorstehende Abschnitt der Teleskopstange 10. An dem Profilrohr 11 ist vorderseitig ein Schwenklager 17 für einen unteren Gestellholm 2a, 2b vorgesehen. Die Schwenklager 17 sind beidseitig am Profilrohr 11 vorgesehen und nehmen die sich nach außen und hinten erstreckenden Gestellholme 2a, 2b auf. Die Gestellholme 2a, 2b können darüber hinaus im vorderen und/oder hinteren Abschnitt abgeknickt bzw. gekröpft sein, sie können aber auch bogenförmig oder linear ausgebildet sein. Am hinteren Ende weisen die Gestellholme 2a, 2b Lagerelemente auf, die vorzugsweise ebenfalls aus Kunststoff gefertigt sind, an denen die hinteren Räder 3 befestigt sind. In der Draufsicht verlaufen beide Gestellholme 2a, 2b zueinander in einem V. Die Schwenklager 17 sind dabei so ausgeführt, dass ein Verschwenken der Gestellholme 2a, 2b in Richtung des Profilrohres 11 möglich ist. Im unteren hinteren Bereich der Gestellholme 2a, 2b sind weitere Schwenklager 18 vorgesehen, an denen Stützholme 7a, 7b angelenkt sind. Diese Stützholme 7a, 7b sind von hinten gesehen ebenfalls V-förmig aufgestellt und an einem Träger 6, der z. B. ein Kunststoffteil ist, angelenkt, und zwar in dort vorgesehenen schalenförmigen Kammern, wodurch eine Teilumschließung und ein Anschlag der Stützholme 7a, 7b gegeben ist. Dadurch wird ein sicherer Stand gewährleistet. Die Anlenkung erfolgt in einer solchen schalenförmigen Ausnehmung dermaßen, dass bei Vorschieben des verschiebbar auf dem Profilrohr 11 aufgesetzten Trägers 6 die Stützholme 7a, 7b automatisch aus den Aufnahmen herausschwenken und die beweglichen Gestellholme 2a, 2b anziehen. Dies ist aus den Figuren 3 und 4 ersichtlich. An dem Träger 6 ist ferner eine Lagerstelle für eine U-förmige Spreizstange 8a, 8b vorgesehen, die aus zwei geteilten oder unten miteinander verbundenen Schenkeln besteht. Die Weite bestimmt dabei die Abstandsweite der Gestellholme 1a, 1b, bzw. ist diese der Abstandsweite angepasst. Die Spreizstange 8a, 8b ist in dem Träger 6 in einer Lagerkammer 19 mit dem mittigen Abschnitt schwenkbar gelagert. Dabei können die einzelnen Hälften gesondert gelagert sein oder aber auch bei einteiliger Ausbildung die U-förmige Spreizstange insgesamt. Die Lagerkammer 19 ist so ausgebildet, dass ein Anschlag in der aufgestellten Position, wie es sich aus Fig. 1 ergibt, gegeben ist, während ein Durchdrücken nach hinten beim Vorschieben des Trägers 6 möglich ist.

Die oberen Enden der Spreizstange 8a, 8b sind über Schwenklager 13 an Lagerarmen 12a, 12b schwenkbar angelenkt, die ihrerseits entweder an den Gestellholmen 1a, 1b obenseitig befestigt sind oder an den hierzu vorgesehenen Schiebestangen 14a, 14b oder aber an einem Lagerarm, der Gehäusebestandteil der Rastkupplung 16a, 16b ist, die als Schwenkgelenk das obere Ende des Gestellholmes 1a, 1b mit dem unteren Ende der Schiebestange 14a, 14b verbindet. Die Schiebestange 14a, 14b ist also nach vorn verschwenkbar ausgeführt, so dass sie aus der dargestellten Aufstellposition in Fig. 1 in eine aus Fig. 2 ersichtliche Position verschwenkt werden kann, in der die Schiebestange 14a, 14b - dies gilt für beide Seiten gleichermaßen - über das Gestellholm 1a, 1b geschwenkt ist. Am Ende der Schiebestangen 14a, 14b befindet sich je ein Einzelschieber 15, damit das Wagengestell von einer Person geschoben werden kann. Die Gestellholme 1a, 1b sind über das Schwenklager 21 an dem Verbindungsteil 9 in vertikaler Richtung verschwenkbar gelagert.

Die Schiebestange 14a, 14b wird, wie aus Fig. 2 ersichtlich, über den Gestellholm 1a, 1b geschwenkt, wodurch das Wagengestell verkürzt wird. Die übrigen Elemente bleiben dabei aufgestellt. Erst durch Lösen einer nicht dargestellten Arretierungseinrichtung an dem Träger 6, über die der Träger 6 in der hinteren Position an das Profilrohr fixiert ist, ist es möglich, den Träger 6 nach vorne auf dem Profilrohr 11 entlang zu verschieben. Dies ist aus Fig. 3 ersichtlich. Dabei geraten die Stützstreben7a, 7b aus den Lagerkammern 20 und die Spreizstangen 8a, 8b aus den Lagerkammern 19 und werden nach hinten verschwenkt. Gleichzeitig werden über die Stützholme 7a, 7b die unteren Gestellholme 2a, 2b in Richtung der Rohrachse verschwenkt. Die hinteren Räder 3 werden also eingezogen, so dass die Breite des Gestells sich verändert.

Aus Fig. 3 ist ferner ersichtlich, dass durch die Anlenkung der Spreizstange 8a, 8b an dem Träger 6 und die Anlenkung an den Lagerarmen 12a, 12b durch die Verschiebung des Schwenklagers 13, das in der aufgestellten Position gemäß Fig 1 gegenüber dem Träger 6 vorverlagert ist und sich beim Verschieben dahinter befindet, zugleich das Teleskoprohr 10 in das Profilrohr 11 hineingeschoben wird. Im Ausführungsbeispiel ist das Teleskoprohr 10 so lang, dass es rückseitig aus dem Profilrohr 11 hervortritt. Durch weiteres Verschieben des Trägers 6 nimmt dabei letztendlich das Gestell den aus Fig. 4 ersichtlichen zusammengelegten Zustand ein. Dies ist der Verstauzustand. Wenn die Spreizstangen 8a, 8b geteilt sind, also zwei Schenkel gesondert am Träger 6 in den Lagerkammern 19 so gelagert sind, z. B. V-förmig verlaufend, dass sie eine einziehende Wirkung auf die nicht nur um eine Horizontalachse sondern auch um eine Vertikalachse verschwenkbar gelagerten Gestellholme 1a, 1b ausüben, so ist ersichtlich, dass in völliger Übereinstimmung mit den unteren Gestellholmen 2a, 2b über die Stützholme 7a, 7b, die in Lagerkammer 20 im Träger 6 gelagert sind, ein automatisches Zusammenschwenken der beiden Gestellholme 1a, 1b ebenfalls gegeben ist. Es ist ersichtlich, dass auch das Gestell oberhalb des Teleskoprohres 10 und des Profilrohres 11 zusammengeschwenkt werden kann und nicht nur der untere Teil. Des Weiteren ist ersichtlich, dass eine Verkürzung des Wagengestells automatisch beim Zusammenfalten gegeben ist, so dass auf besonders kleinem Raum ein solches zusammengelegtes Fahrgestell untergebracht werden kann.

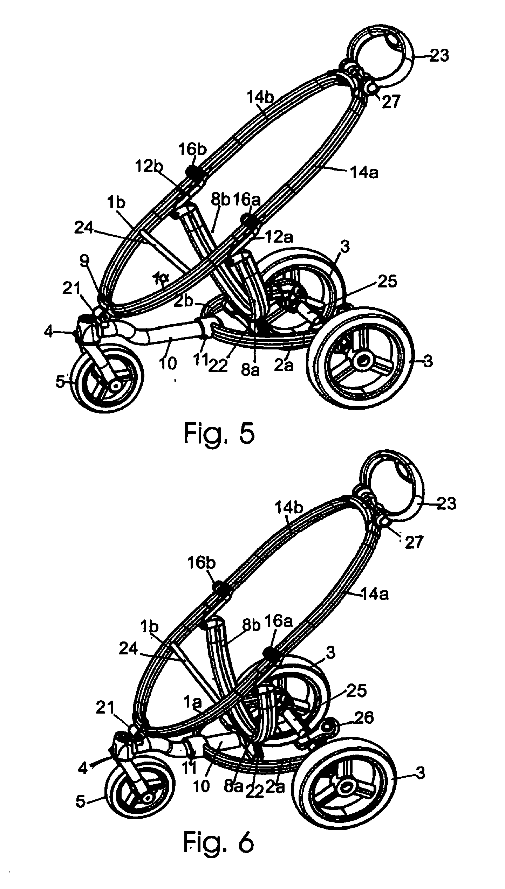

Ein weiteres Beispiel einer nicht erfindungsgemäßen Ausgestaltung eines Wagengestells für Kinder- oder Puppenwagen ist in den Figuren 5, 6 und 7 perspektivisch dargestellt, und zwar in Figur 5 in der aufgestellten Gebrauchsstellung, in der zwischen die seitlichen Holme ein Kinderliege- oder Kindersitzeinsatz anmontiert werden kann. Die hierfür benötigten Adapter (nicht dargestellt) sind an den schrägen seitlichen Holmen befestigbar.

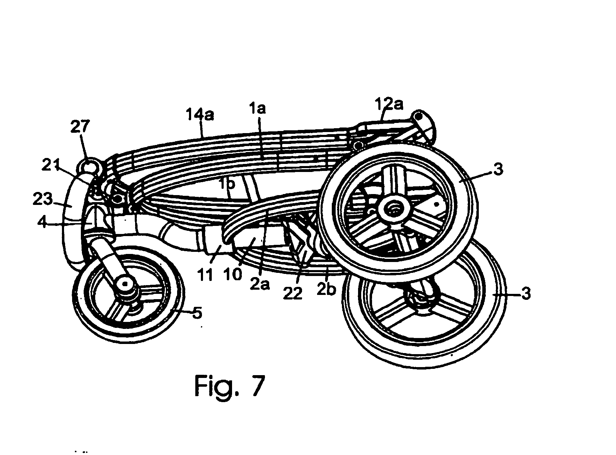

In Figur 6 ist das gleiche Gestell dargestellt, bei dem das Profilrohr 11 auf der Teleskopstange 10 vorgeschoben eingezeichnet ist und in Figur 7 ist das Gestell im völlig zusammengelegten Zustand dargestellt.

Aus diesen Abbildungen ist ersichtlich, dass die Breite des Fahrgestells sowohl im aufgestellten als auch im zusammengeklappten Zustand gleich bleibt. Das Gestell besteht aus schräg von unten nach oben verlaufenden Gestellholmen 1a und 1b, an deren oberen Enden Rastkupplungen 16a, 16b befestigt sind, über die die Schiebestangen 14a und 14b angekoppelt sind. Diese Schiebestangen sind obenseitig durch einen an einem Brückenteil befestigen Schiebering 23 miteinander starr verbunden. Untenseitig sind die, ein längliches Oval mit den Schiebestangen 14a, 14b bildenden oberen Gestellholme 1a, 1b über ein Verbindungsteil 9 fest miteinander verbunden und durch eine Querstange 24 auf Abstand gehalten. Das Verbindungsteil 9 ist um eine quer zur Längsachse des Fahrgestells verlaufende Schwenkachse drehbar gelagert, so dass die oberen Gestellholme 1a und 1b abgesenkt oder in die in Figur 5 dargestellte Gebrauchsstellung verschwenkt werden können. Das Lager befindet sich an einem Lagerelement 4, an dem eine Gabel vorgesehen ist, zwischen der das Vorderrad 5 drehbar gelagert ist. Die Teleskopstange 10, an der vorderseitig das Lagerelement 4 und das Schwenklager 21, die in einem Kunststoffgehäuse gemeinsam untergebracht sind, befestigt sind, ist gekröpft ausgeführt und weist einen längeren hinteren Abschnitt auf. Auf diesem Abschnitt ist ein kurzes Profilrohr 11 verschiebbar aufgesetzt und in der Ausführung nach Figur 5 im aufgestellten Zustand an der Teleskopstange 10 durch nicht dargestellte Arretierungsmittel arretiert.

An dem Profilrohr 11 sind seitlich bogenförmig aufgeführte untere Holme 2a, 2b fest befestigt und in der Ausführung nahezu horizontal verlaufend angeordnet. Die Enden dieser Holme sind über eine querverlaufende hintere Achse 25 miteinander verbunden, auf der ein Bremspedal 26 angeordnet ist. Seitlich auf den vorstehenden, nicht sichtbaren Naben der Achse 25 sind die hinteren Räder 3 aufgesteckt. Zwischen den beiden unteren Holmen 2a, 2b befindet sich ein Brückenelement 22, das verschwenkbar gelagert ist und so hoch ausgebildet ist, dass die Teleskopstange 10 darunter fahren kann, auch dann, wenn das Gestell zusammengeklappt ist. Das Brückenelement 22 kann auch so weit gegenüber dem Ende des Profilrohres 11 versetzt sein, dass im eingeschobenen Zustand der Teleskopstange 10 diese vor dem Brückenelement 22 endet. An dem Brückenteil 22 ist obenseitig fest verbunden ein U-förmiger Bügel vorgesehen, dessen beide Schenkel Spreizstangen 8a und 8b bilden. Die oberen Enden der Spreizstangen 8a, 8b sind an Lagerarmen 12a, 12b schwenkbeweglich befestigt, die ihrerseits direkt oder über ein Zwischenelement an den Schiebestangen 14a, 14b derart befestigt sind, dass beim Vorschwenken der Schiebestangen 14a, 14b nach Lösen der Rastkupplungen 16a, 16b die Spreizstangen 8a, 8b automatisch um das Schwenklager des Brückenelementes 22 nach hinten verschwenkt werden. Beim Vorschieben des Profilrohres 11 nehmen die Spreizstangen 8a, 8b zunächst die aus Figur 6 ersichtliche Position ein. Danach erfolgt das rückseitige Umlegen derselben nach hinten. Wenn der Vorgang abgeschlossen ist, nimmt das Gestell die aus Figur 7 ersichtliche zusammengeklappte Position ein. Dabei kann der Schiebering 23, der über eine Rastkupplung 27 verschwenkbar gelagert ist, über das Lagerelement 4 geschwenkt werden, wodurch auch die Schwenkbewegung des Lagerelementes 4 mit der Gabel für das Vorderrad 5 blockiert ist.

In Abwandlung kann dieses in den Figuren 5 bis 7 dargestellte Wagengestell auch so ausgeführt sein, dass zu der vertikalen Faltung auch eine horizontale Faltung zwangsweise erfolgt. Zu diesem Zweck müssten die oberen Holme 1a, 1b untenseitig verschwenkbar am Verbindungsteil 9 befestigt und die Brückenverbindung an den Schiebestangen aufhebbar sein. Des Weiteren müssten die unteren Holme 2a, 2b und die Spreizstangen 8a, 8b schwenkbeweglich an dem Profilrohr 11 oder an den unten Seitenholmen 2a, 2b angelenkt sein.

### Bezugszeichenliste

- 1a: oberer Gestellholm
- 1b: oberer Gestellholm
- 2a: unterer Gestellholm
- 2b: unterer Gestellholm
- 3: hinteres Rad
- 4: Lagerelement
- 5: Vorderrad
- 6: Träger
- 7a: Stützholm
- 7b: Stützholm
- 8a: Spreizstange
- 8b: Spreizstange
- 9: Verbindungsteil
- 10: Teleskopstange
- 11: Profilrohr
- 12a: Lagerarm
- 12b: Lagerarm
- 13: Schwenklager
- 14a: Schiebestange
- 14b: Schiebestange
- 15: Einzelschieber
- 16a: Rastkupplung
- 16b: Rastkupplung
- 17: Schwenklager
- 18: Schwenklager
- 19: Lagerkammer
- 20: Lagerkammer
- 21: Schwenklager
- 22: Brückenelement
- 23: Schiebering
- 24: Querstange
- 25: hintere Achse
- 26: Bremspedal
- 27: Rastkupplung

## Patentansprüche

1. Schiebewagengestell für Kinder- und/oder Puppenwagen, aufweisend:
mindestens zwei untere hintere Gestellholme (2a, 2b) und Stützholme (7a, 7b)
mit Lagerelementen für seitliche Hinterräder (3),
mindestens ein den Stützholmen (7a, 7b) vorderseitig vorstehendes Profilrohr (11), mindestens ein vorderes Lagerelement (4) für eine Radanordnung mit mindestens einem Rad (5), wobei
das mindestens eine vordere Lagerelement (4) für die mindestens eine Vorderradanordnung an dem vorderen Ende einer Teleskopstange (10) befestigt ist, die in einer im Querschnitt angepassten Innenlängsführung im Profilrohr (11) zur Veränderung des Radachsenabstandes zwischen den Hinterrad- und den Vorderradachsen verschiebbar gelagert ist und mindestens in einer vorgezogenen Position arretierbar ist wobei das mindestens eine Profilrohr (11) mit den zwei unteren hinteren Gestellholmen (2a, 2b) und Stützholmen (7a, 7b) verbunden ist.

2. Schiebewagengestell nach Anspruch 1, **dadurch gekennzeichnet,**
- **dass** zwei obere, spiegelbildlich angeordnete, von vorn nach hinten ansteigend verlaufende, durchgehende oder aus miteinander verbundenen Abschnitten gebildete Gestellholme (1a, 1b) vorgesehen sind, zwischen denen im aufgestellten Zustand des Wagengestells ein Einsatz anordenbar ist und deren untere Enden zum Verbringen aus mindestens einer abgesenkten zusammengelegten Stellung in eine Aufstellposition mindestens nach oben schwenkbar an oder dem ist einem Verbindungsteil (9) schwenkbar gelagert und an dem mindestens einen Profilrohr (11) abgestützt sind,
**dass** die zwei unteren spiegelbildlich angeordneten Gestellholme (2a, 2b) vorgesehen sind, an deren hinteren Enden Lagerelemente für Räder (3) oder Räderanordnungen befestigt sind,
- **dass** die zwei unteren spiegelbildlich angeordneten Gestellholme (2a, 2b) aus von vorn nach hinten im Wesentlichen V-förmig verlaufende, durchgehende oder aus miteinander verbundenen Abschnitten gebildete Gestellholme (2a, 2b) sind, an deren hinteren Enden Lagerelemente für hintere Räder (3) oder Räderanordnungen befestigt sind,
- **dass** ein aufstellbares Spreizgestänge vorgesehen ist, das mindestens zwei obere Spreizstangen (8a, 8b)aufweist, die seitlich nach oben abstehend verlaufen und untenseitig schwenkbar gelagert und mit ihren oberen Enden schwenkbeweglich mit den oberen Gestellholmen (1a, 1b) direkt oder indirekt verbunden sind,
- **dass** das Verbindungsteil (9) an der mindestens einen Teleskopstange (10) vorderseitig befestigt ist,
- **dass** das Profilrohr (11) Schwenklager (17) für die unteren schwenkbaren Gestellholme (2a, 2b) aufweist,
- **dass** auf dem Profilrohr (11) verschiebbar und mindestens in der hinteren Verschiebeposition, in der das Wagengestell aufgestellt ist, mindestens ein arretierbarer Träger (6) für das Spreizgestänge (8a, 8b) gelagert ist,
- **dass** an dem Träger (6) verschwenkbar die zwei unteren Stützholme (7a, 7b) seitlich nach unten abstehend verlaufend angelenkt sind, die mit ihren unteren Enden an den unteren Gestellholmen (2a, 2b) im hinteren Bereich verschwenkbar angelenkt sind, und/oder mit beiden oberen Spreizstangen (8a, 8b) oder ein daraus gebildeter Bügel angelenkt ist bzw. sind, und
- **dass** nach der Entriegelung der Arretierung des Trägers (6) beim Verbringen des Wagengestells aus der Gebrauchsstellung in die zusammengeklappte Verstaustellung durch Vorschieben des Trägers (6) auf dem Profilrohr (11) das Spreizgestänge (8a, 8b) mindestens nach hinten schwenkt.

3. Schiebewagengestell nach Anspruch 1, **dadurch gekennzeichnet,**
- **dass** zwei obere, spiegelbildlich angeordnete, von vorn nach hinten ansteigend verlaufende, durchgehende oder aus miteinander verbundenen Abschnitten gebildete Gestellholme (1a, 1b) vorgesehen sind, zwischen denen im aufgestellten Zustand des Wagengestells ein Einsatz anordenbar ist und deren untere Enden zum Verbringen aus mindestens einer abgesenkten zusammengelegten Stellung in eine Aufstellposition mindestens nach oben schwenkbar an oder mit einem Verbindungsteil (9) schwenkbar gelagert und an dem mindestens einen Profilrohr (11) abgestützt sind,
- **dass** die zwei unteren spiegelbildlich angeordneten Gestellholme (2a, 2b) vorgesehen sind, an deren hinteren Enden Lagerelemente für Räder (3) oder Räderanordnungen befestigt sind,
- **dass** die zwei unteren spiegelbildlich angeordneten Gestellholme (2a, 2b) aus von vorn nach hinten im Wesentlichen V-förmig verlaufende, durchgehende oder aus miteinander verbundenen Abschnitten gebildete Gestellholme (2a, 2b) sind, an deren hinteren Enden Lagerelemente für hintere Räder (3) oder Räderanordnungen befestigt sind,
- **dass** ein aufstellbares Spreizgestänge vorgesehen ist, das mindestens zwei obere Spreizstangen (8a, 8b)aufweist, die seitlich nach oben abstehend verlaufen und untenseitig schwenkbar gelagert und mit ihren oberen Enden schwenkbeweglich mit den oberen Gestellholmen (1a, 1b) direkt oder indirekt verbunden sind,
- **dass** das Verbindungsteil (9) an der Teleskopstange (10) vorderseitig und um eine horizontale Achse eines Schwenklagers (21) schwenkbeweglich befestigt ist,
- **dass** das Profilrohr (11) Schwenklager oder Befestigungspunkte für die unteren schwenkbaren oder bügelförmig starr ausführbare Gestellholme (2a, 2b) aufweist,
- **dass** an dem Profilrohr (11) zwischen den unteren Holmen (2a, 2b) die beiden oberen Spreizstangen (8a, 8b) mit den beiden oberen Spreizstangen (8a, 8b) oder die beiden oberen Spreizstangen (8a, 8b) direkt an den unteren Holmen (2a, 2b) schwenkbeweglich gelagert sind,
- **dass** das Profilrohr (11) als Träger (6) in der hinteren Verschiebeposition, in der das Wagengestell aufgestellt ist, mittels einer lösbaren Arretiereinrichtung an der Teleskopstange (10) fixiert ist, und
- **dass** an der Teleskopstange (10) vorderseitig das Lagerelement (4) für die Vorderradanordnung (5) vorgesehen ist, wobei nach der Entriegelung der Arretiereinrichtung beim Verbringen des Wagengestells aus der Gebrauchsstellung in die zusammengeklappte Verstaustellung durch Vorschieben des Profilrohes (11) auf dem Teleskoprohr (10) die oberen Spreizstangen (8a, 8b) mindestens nach hinten über die unteren hinteren Gestellholme (2a, 2b) schwenken und die mitgekoppelten oberen Gestellholme (1a, 1b) in Richtung der Ebene der Teleskopstange (10) und der des Profilrohres (11) verschwenken.

4. Schiebewagengestell nach Anspruch 1, 2 oder 3,
**dadurch gekennzeichnet, dass** sowohl die unteren hinteren Gestellholme (2a, 2b) als auch die Stützholme (7a, 7b) in Richtung des Profilrohres (11) und mitgekoppelte obere Gestellholme (1a, 1b) in Richtung der Ebene der Teleskopstange (10) und der des Profilrohres (11) an der Teleskopstange (10) oder dem Profilrohr (11) verschwenkbar gelagert sind.

5. Schiebewagengestell nach Anspruch 2 oder 3, **dadurch gekennzeichnet, dass** die oberen Schwenklager (13) für die Enden der hinteren oberen Spreizstangen (8a, 8b) an den Holmen (1a, 1b) oder an den über Rastkupplungen (16a, 16b) angelenkten Schiebestangen (14a, 14b) im unteren Bereich direkt oder an an diesen befestigten, nach unten vorstehenden Lagerarmen (12a, 12b) oder an Gehäusearmen des Gehäuses der Rastkupplungen (16a, 16b) vorgesehen sind, dass in der aufgestellten Position des Wagengestells die Schwenklager (13) gegenüber dem verschiebbaren Träger (6) vorgelagert sind, derart, dass beim Vorschieben des Trägers (6) oder des Profilrohres (11) und Verschwenken mindestens der oberen Spreizstangen (8a, 8b) des Spreizgestänges (8a, 8b) nach hinten automatisch das Profilrohr (11) nach vorne über die Teleskopstange (10) schiebbar ist, wobei je nach Längenabstimmung die Teleskopstange (10) in dem Profilrohr (11) verbleibt oder rückseitig hervorsteht.

6. Schiebewagengestell nach einem der Ansprüche 2 bis 5, **dadurch gekennzeichnet, dass** die oberen Gestellholme (1a, 1b) mindestens bis zum Schwenkgelenk (13) der oberen Spreizstangen (8a, 8b) parabelförmig verlaufen, wobei diese entweder über das Verbindungsteil (9) oder direkt starr miteinander verbunden sind oder an dem Verbindungsteil (9) schwenkbeweglich angelenkt sind.

7. Schiebewagengestell nach Anspruch 2 oder 3, **dadurch gekennzeichnet, dass** in Verlängerung zu den oberen, schräg verlaufenden Gestellholmen (1a, 1b) Schiebestangen (14a, 14b) vorgesehen sind, deren Enden Einzelschieber (15) sind oder über einen Schiebebügel miteinander verbunden sind, der starr oder durch Gelenke oder Rastkupplungen mittig geteilt und zusammenfaltbar ausgeführt ist.

8. Schiebewagengestell nach Anspruch 1, 2 oder 3, **dadurch gekennzeichnet, dass** die Arretiereinrichtung einen Arretierzapfen aufweist, der in eine Arretierungsausnehmung oder in einen Arretierungsdurchbruch in der Wand des Profilrohres (11) und/oder der Teleskopstange (10) rastend eingreift.

9. Schiebewagengestell nach Anspruch 3, **dadurch gekennzeichnet, dass** die unteren Enden der oberen Gestellholme (1a, 1b) derart miteinander schwenkbeweglich verbunden oder an dem Verbindungsteil (9) derart angelenkt sind und/oder das Verbindungsteil (9) verschwenkbar an der Teleskopstange (10) befestigt ist, dass beim Zusammenklappen des Schiebewagengestells die Gestellholme (1a, 1b) und die Spreizstangen (8a, 8b), bei entsprechender Lagerung an dem Träger (6) oder an dem Profilrohr (11), und die unteren hinteren Gestellholme (2a, 2b) mit den daran angelenkten Stützholmen (7a, 7b) sich jeweils gleichzeitig aufeinanderzu bewegen, um die Breite des Schiebewagengestells in der Verstauposition zu verkleinern.

10. Schiebewagengestell nach Anspruch 5, **dadurch gekennzeichnet, dass** die Lagerarme (12a, 12b) Bestandteil des Gehäuses der Rastkupplung (16a, 16b) sind, das an den oberen Gestellholmen (1a, 1b) obenseitig befestigt ist, oder dass die Lagerarme (12a, 12b) an der Schiebestange (14a, 14b) im unteren Bereich befestigt sind, wodurch beim Überschwenken der Schiebestangen (14a, 14b) nach Lösen der Arretiereinrichtung an dem Träger (6) oder an dem Profilrohr (11) dieser oder dieses automatisch vorschiebt.

11. Schiebewagengestell nach Anspruch 4, **dadurch gekennzeichnet, dass** die Spreizstangen (8a, 8b) und/oder die zwei unteren hinteren Stützholme (2a, 2b) an dem Profilrohr (11) so angelenkt sind, dass diese beim Vorschieben des Trägers (6) die hinteren Räder (3) aufeinander zu schwenken.

12. Schiebewagengestell nach Anspruch 1, 2 oder 3, **dadurch gekennzeichnet, dass** die Spreizstangen (8a, 8b) und/oder die zwei unteren hinteren Gestellholme (2a, 2b) oder die Stützholme (7a, 7b) die seitlichen Arme eines Y-förmigen Stützhalters sind, der oder die mit der Mittensäule schwenkbeweglich an dem Träger (6) oder an dem Profilrohr (11) obenseitig und/oder untenseitig mit dem Ende gelagert sind.

13. Schiebewagengestell nach Anspruch 2, **dadurch gekennzeichnet, dass** der Träger (6) ein geteilter Träger ist, der aus zwei Teilen besteht, die unabhängig voneinander verschiebbar gelagert sind, wobei der eine Teil die oberen Spreizstangen (8a, 8b) oder die Mittensäule des Stützhalters trägt und am zweiten hinteren Teil die unteren Stützholme (7a, 7b) angelenkt sind, und dass beide Teile gesondert in der Aufstellposition des Wagengestells oder gemeinsam am Profilrohr (11) fixiert sind.

14. Schiebewagengestell nach Anspruch 1, 2, 3 oder 5, **dadurch gekennzeichnet, dass** die Teleskopstange (10) beim Einschieben in das Profilrohr (11) eine mechanische Federanordnung oder eine Gasdruckfeder in oder an dem Profilrohr (11) spannt, die in der gespannten Stellung arretierbar ist und nach dem Lösen der Arretierung die Teleskopstange (10) vorschiebt, oder in dem Profilrohr (11) mit einer Dämpfungseinrichtung zusammenwirkt, insbesondere mit einer Druckfeder, die auf die Längsachse der Teleskopstange (10) beim Schieben einwirkende Kräfte dämpft.

15. Schiebewagengestell nach Anspruch 2, 3, 5 oder 14, **dadurch gekennzeichnet, dass** das Verbindungsteil (9) auf der Teleskopstange (10) oder dem Profilrohr (11) längsverschiebbar und mindestens in einer vorderen Position fixierbar gelagert ist.

16. Schiebewagengestell nach einem der vorhergehenden Ansprüche, **dadurch gekennzeichnet, dass** zwei Profilrohre (11) parallel vorgesehen sind, in denen Teleskopstangen (10) unabhängig oder gemeinsam vorziehbar und einschiebbar gelagert sind.

17. Schiebewagengestell nach Anspruch 16, **dadurch gekennzeichnet, dass** die Verbindungsteile (9) und Träger (6) an beiden Teleskopstangen (10) und/oder Profilrohren (11) befestigt oder gelagert sind.

## Claims

1. Push carriage frame for child and/or dolls carriages, comprising: at least two lower rear frame struts (2a, 2b) and support struts (7a, 7b) with mounting elements for lateral rear wheels (3), at least one profile tube (11) protruding forwardly of the support struts (7a, 7b), at least one front mounting element (4) for a wheel arrangement with at least one wheel (5), wherein the at least one front mounting element (4) for the at least one front wheel arrangement is fastened to the front end of a telescopic rod (10), which is displaceably mounted in a cross-sectionally matched inner longitudinal guide in the profile tube (11) for changing the wheel axle spacing between the rear wheel and front wheel axles and is lockable at least in a forwardly extended position, wherein the at least one profile tube (11) is connected with the two lower, rear frame struts (2a, 2b) and support struts (7a, 7b).

2. Push carriage frame according to claim 1, **characterised in that**
- two upper frame struts (1a, 1 b), which are arranged in mirror image and extend to rise from front to back and are formed to be continuous or from interconnected sections are provided, between which struts in the erected state of the carriage frame an insert can be arranged and the lower ends of which struts are pivotably mounted on or by a connecting part (9) to be pivotable at least upwardly in order to be brought from at least one lowered, collapsed setting into an erected position and are supported at the at least one profile tube (11),
- the two lower frame struts (2a, 2b) arranged in mirror image are provided, to the lower ends of which mounting elements for wheels (3) or wheel arrangements are fastened,
- the two lower frame struts (2a, 2b) arranged in mirror image are frame struts (2a, 2b), which extend from front to back substantially in V-shape and are formed to be continuous or from interconnected sections and to the rear ends of which mounting elements for rear wheels (3) or wheel arrangements are fastened,
- an erectable bracing linkage is provided, which comprises at least two upper bracing bars (8a, 8b), which extend upwardly at the sides to be upright and are pivotably mounted at the lower end and directly or indirectly connected by the upper ends thereof with the upper frame struts (1 a, 1 b) to be pivotably movable,
- the connecting part (9) is fastened at the front end to the at least one telescopic rod (10),
- the profile tube (11) has pivot mounts (17) for the lower, pivotable frame struts (2a, 2b),
- at least one lockable support (6) for the bracing linkage (8a, 8b) is mounted on the profile tube (11) to be displaceable and at least in the rear displacement position in which the carriage frame is erected,
- the two lower support struts (7a, 7b) are articulated to the support (6) to be pivotable and to extend downwardly at the sides to be upright, which support posts are pivotably articulated by the lower ends thereof to the lower frame struts (2a, 2b) in the rear region and/or is or are articulated by the two upper bracing bars (8a, 8b) or a bracket formed therefrom, and
- after release of the locking of the support (6) on bringing the carriage frame from the use setting to the collapsed stowage setting by pushing forward the support (6) on the profile tube (11) the bracing linkage (8a, 8b) pivots at least rearwardly.

3. Push carriage frame according to claim 1, **characterised in that**
- two upper frame struts (1a, 1b), which are arranged in mirror image and extend to rise from front to back and are formed to be continuous or from interconnected sections are provided, between which struts in the erected state of the carriage frame an insert can be arranged and the lower ends of which struts are pivotably mounted on or by a connecting part (9) to be pivotable at least upwardly in order to be brought from at least one lowered, collapsed setting into an erected position and are supported at the at least one profile tube (11),
- the two lower frame struts (2a, 2b) arranged in mirror image are provided, to the lower ends of which mounting elements for wheels (3) or wheel arrangements are fastened,
- the two lower frame struts (2a, 2b) arranged in mirror image are frame struts (2a, 2b), which extend from front to back substantially in V-shape and are formed to be continuous or from interconnected sections and to the rear ends of which mounting elements for rear wheels (3) or wheel arrangements are fastened,
- an erectable bracing linkage is provided, which comprises at least two upper bracing bars (8a, 8b), which extend upwardly at the sides to be upright and are pivotably mounted at the lower end and directly or indirectly connected by the upper ends thereof with the upper frame struts (1a, 1b) to be pivotably movable,
- the connecting part (9) is fastened to the telescopic rod (10) at the front end and to be pivotably movable about a horizontal axis of a pivot bearing (21),
- the profile tube (11) has pivot bearings or fastening points for the lower frame struts (2a, 2b), which are pivotable or can be constructed to be rigid in bracket shape,
- the two upper bracing bars (8a, 8b) are mounted on the profile tube (11) between the lower struts (2a, 2b) by the two upper bracing bars (8a, 8b) to be pivotably movable or the two upper bracing bars (8a, 8b) are mounted directly on the lower struts (2a, 2b) to be pivotably movable,
- the profile tube (11) as support (6) is fixed in the lower displacement position, in which the carriage frame is erected, to the telescopic rod (10) by means of a releasable locking device and
- the bearing element (4) for the front wheel arrangement (5) is provided at the telescopic rod (10) at the front end, wherein after release of the locking device on bringing the carriage frame from the use setting into the collapsed stowage setting by pushing forward the profile tube (11) on the telescopic rod (10) the upper bracing struts (8a, 8b) pivot at least rearwardly over the lower, rear frame struts (2a, 2b) and the coupled upper frame struts (1a, 1b) pivot in the direction of the plane of the telescopic road (10) and that of the profile tube (11).

4. Push carriage frame according to claim 1, 2 or 3, **characterised in that** not only the lower, rear frame struts (2a, 2b), but also the support struts (7a, 7b) are mounted on the telescopic rod (10) or the profile tube (11)to be pivotable in the direction of the profile tube (11) and coupled upper frame struts (1a, 1 b) in the direction of the plane of the telescopic rod (10) and that of the profile tube (11).

5. Push carriage frame according to claim 2 or 3, **characterised in that** the upper pivot mount (13) for the ends of the rear, upper bracing bars (8a, 8b) are provided at the struts (1a, 1b) or at the push rods (14a, 14b), which are articulated by way of detent couplings (16a, 16b), directly in the lower region or at bearing arms (12a, 12b), which are fastened to these and protrude downwardly, or at housing arms of the housing of the detent couplings (16a, 16b), that in the erected position of the carriage frame the pivot mounts (13) are premounted relative to the displaceable support (6) in such a manner that on pushing forward the support (6) or the profile tube (11) and pivotation of at least the upper bracing bars (8a, 8b) of the bracing linkage (8a, 8b) downwardly the profile tube (11) can be automatically pushed forward over the telescopic rod (10), wherein depending on the respective matching of length the telescopic rod (10) remains in or protrudes rearwardly from the profile tube (11).

6. Push carriage frame according to any one of claims 2 to 5, **characterised in that** the upper frame struts (1a, 1b) extend parabolically at least up to the pivot joint (13) of the upper bracing bars (8a, 8b), wherein these are rigidly connected together either by way of the connecting part (9) or directly or are articulated to the connecting part (9) to be pivotably movable.

7. Push carriage frame according to claim 2 or 3, **characterised in that** provided in prolongation of the upper, obliquely extending frame struts (1a, 1b) are push rods (14a, 14b), the ends of which are individual pushers (15) or are connected together by way of a push yoke which is constructed to be rigid or centrally divided by joints or detent couplings and foldable together.

8. Push carriage frame according to claim 1, 2 or 3, **characterised in that** the locking device comprises a locking pin which engages in detenting manner in a locking recess or in a locking passage in the wall of the profile tube (11) and/or the telescopic rod (10).

9. Push carriage frame according to claim 3, **characterised in that** the lower ends of the upper frame struts (1a, 1b) are pivotably movably connected together in such a manner or articulated to the connecting part (9) in such a manner and/or the connecting part (9) is pivotably fastened to the telescopic rod (10) that on collapsing of the push carriage frame the frame struts (1a, 1b) and the bracing bars (8a, 8b), in the case of appropriate mounting on the support (6) or the profile rube (11), and the lower, rear frame struts (2a, 2b) together with the support struts (7a, 7b) articulated thereto respectively simultaneously move towards one another in order to reduce the width of the push carriage frame in the stowage position.

10. Push carriage frame according to claim 5, **characterised in that** the mounting arms (12a, 12b) are a component of the housing of the detent coupling (16a, 16b), which is fastened to the upper frame struts (1a, 1b) at the top, or that the mounting arms (12a, 12b) are fastened to the push rods (14a, 14b) in the lower region, whereby on swinging over of the push rods (14a, 14b) after release of the locking device at the support (6) or at the profile tube (11) this automatically displaces forwardly.

11. Push carriage frame according to claim 4, **characterised in that** the bracing bars (8a, 8b) and/or the two lower, rear frame struts (2a, 2b) are so articulated to the profile tube (11) that these, on forward displacement of the support (6), pivot the rear wheels (3) towards one another.

12. Push carriage frame according to claim 1, 2 or 3, **characterised in that** the bracing bars (8a, 8b) and/or the two lower, rear frame struts (2a, 2b) or the support struts (7a, 7b) are the lateral arms of a Y-shaped support mount, which are mounted by the centre column on the support (6) or on the profile tube (11) at the top and/or the bottom by the end to be pivotably movable.

13. Push carriage frame according to claim 2, **characterised in that** the support (6) is a divided support consisting of two parts, which are mounted to be displaceable independently of one another, wherein one part carries the upper bracing bars (8a, 8b) or the centre column of the support mount, and the lower support struts (7a, 7b) are articulated to the second, rear part, and that the two parts are separately fixed in the erected position of the carriage frame or together to the profile tube (11).

14. Push carriage frame according to claim 1, 2, 3 or 5, **characterised in that** the telescopic rod (10) when being pushed into the profile tube (11) stresses a mechanical spring arrangement or a gas compression spring in or at the profile tube (11), which is lockable in the stressed setting and after release of the locking displaces the telescopic rod (10) forwardly, or co-operates in the profile tube (11) with a damping device, particularly with a compression spring, which damps forces acting on the longitudinal axis of the telescopic rod (10) during the pushing.

15. Push carriage frame according to claim 2, 3, 5 or 14, **characterised in that** the connecting part (9) is mounted on the telescopic rod (10) or the profile tube (11) to be longitudinally displaceable and fixable at least in a forward position.

16. Push carriage frame according to any one of the preceding claims, **characterised in that** two profile tubes (11) are provided in parallel, in which telescopic rods (10) are mounted to be extensible and retractable independently or together.

17. Push carriage frame according to claim 16, **characterised in that** the connecting parts (9) and supports (6) are fastened to or mounted on the two telescopic rods (10) and/or profile tubes (11).

## Revendications

1. Châssis de charriot roulant pour un landau pour enfant/pour poupée présentant :
au moins deux barres de châssis (2a, 2b) inférieures à l'arrière et deux barres d'appui (7a, 7b), avec des éléments de roulement pour les roues arrières latérales (3), au moins un tube profilé (11) se trouvant avant les barres d'appui (7a, 7b) sur le côté avant, au moins un élément de roulement (4) à l'avant pour installer une roue avec au moins une roue (5),
pour lequel,
l'élément de roulement minimal à l'avant (4) est fixé pour l'installation minimale d'une roue avant à l'extrémité avant d'une barre télescopique (10) qui est placée de façon à pouvoir être glissée dans un passage intérieur en longueur adaptée à la coupe dans le tube profilé (11) pour modifier la distance de l'axe des roues entre l'axe des roues arrières et celui des roues avant et peut être bloquée au moins dans une position réglée, le tube profilé (11) au moins présent une fois étant relié avec les deux barres de châssis (2a, 2b) inférieures à l'arrière et les barres d'appui (7a, 7b).

2. Châssis de chariot roulant selon la revendication 1, **caractérisé en ce**la
- que deux barres de châssis (1a, 1b) supérieures, rangées de façon symétrique, montant de l'avant vers l'arrière, continues ou formées par des sections reliées entre elles sont prévues entre lesquelles il est possible de placer un plateau lorsque le châssis est installé et dont les extrémités inférieures peuvent être au moins basculées vers le haut contre une pièce de raccord (9) ou placées de façon à basculer avec cette pièce de raccord et reposent au moins sur le tube profilé (11) afin de passer d'au moins une position assemblée et abaissée à une position installée,
- que les deux barres de châssis (2a, 2b) inférieures organisées de façon symétrique sont prévues, que les éléments de roulement pour roues (3) ou pour installer des roues sont fixés sur leur extrémité arrière,
- que les deux barres de châssis (2a, 2b) inférieures organisées de façon symétrique sont formées par les barres de châssis (2a, 2b) passant essentiellement de l'avant vers l'arrière en forme de V, continues ou formées par des sections reliées entre elles, des éléments de roulement pour les roues arrières (3) ou des installations de roue étant fixés sur leur extrémités arrières,
- qu'une entretoise à installer soit prévue qui présente aux moins deux entretoises supérieures (8a, 8b) qui passent en saillie sur le côté vers le haut ou sont placées sur la partie inférieure de façon à basculer et dont les extrémités supérieures sont reliées directement ou indirectement de façon à basculer avec les barres de châssis supérieures (1a, 1b),
- que la pièce de raccord (9) est fixée sur la barre télescopique (10) au moins présente une fois sur l'avant
- que le tube profilé (11) présente un roulement à bascule (17) pour les barres de châssis (2a, 2b) inférieures et basculables
- que sur le tube profilé (11) un support blocable (6) est placé pour les entretoises (8a, 8b) de façon à glisser et qui est monté au moins dans la position de glissage arrière dans laquelle le châssis du chariot est assemblé,
- que sur le support (6) les deux barres d'appui (7a, 7b) inférieures sont appuyées sur le côté de façon à basculer en passant en saillie vers le bas et dont les extrémités inférieures sont appuyées sur les barres de châssis inférieures (2a, 2b) et peuvent être basculées dans la partie arrière et/ou que ces barres d'appui sont appuyées avec les deux entretoises supérieures (8a, 8b) ou qu'un étrier ainsi formé est appuyé, et
- qu'après le déverrouillage du blocage du support (6) au moment de faire passer le châssis du chariot de la position d'usage à la position de rangement repliée en faisant glisser le support (6) sur le tube profilé (11), les entretoises (8a, 8b) basculent au moins vers l'arrière.

3. Châssis de chariot selon la revendication 1 **caractérisé en ce**la que deux barres de châssis (1a, 1b) supérieures, rangées de façon symétrique, montant de l'avant vers l'arrière, continues ou formées par des sections reliées entre elles sont prévues entre lesquelles il est possible de placer un plateau lorsque le châssis est installé et dont les extrémités inférieures peuvent être au moins basculées vers le haut contre une pièce de raccord (9) ou placées de façon à basculer avec cette pièce de raccord et reposent au moins sur le tube profilé (11) afin de passer d'au moins une position assemblée et abaissée à une position installée,
- que les deux barres de châssis (2a, 2b) inférieures organisées de façon symétrique sont prévues, que les éléments de roulement pour roues (3) ou pour installer des roues sont fixés sur leur extrémité arrière,
que les deux barres de châssis (2a, 2b) inférieures organisées de façon symétrique sont prévues, que les éléments de roulement pour roues (3) ou pour installer des roues sont fixés sur leur extrémité arrière,
- que les deux barres de châssis (2a, 2b) inférieures organisées de façon symétrique sont formées par barres de châssis (2a, 2b) passant essentiellement de l'avant vers l'arrière en forme de V, continues ou formées par des sections reliées entre elles, des éléments de roulement pour les roues arrières (3) ou des installations de roue étant fixés sur leurs extrémités arrières,
- qu'une entretoise à installer soit prévue qui présente aux moins deux entretoises supérieures (8a, 8b) qui passent en saillie sur le côté vers le haut ou sont placées sur la partie inférieure de façon à basculer et dont les extrémités supérieures sont reliées directement ou indirectement de façon à basculer avec les barres de châssis supérieures (1a, 1b),
- que la pièce de raccord (9) est fixée sur la barre télescopique (10) au moins présente une fois sur l'avant et autour de l'axe horizontal d'un roulement à bascule (21) de façon à basculer
- que le tube profilé (11) présente un roulement à bascule ou des points de fixation pour les barres de châssis (2a, 2b) inférieures et basculables ou pouvant être réalisées de façon fixe en forme d'étrier,
- que sur le tube profilé (11) entre les barres inférieures (2a, 2b) les deux entretoises supérieures (8a, 8b) sont placées de façon à basculer avec les deux entretoises supérieures (8a, 8b) ou que les deux entretoises supérieures (8a, 8b) sont placées de façon à basculer directement contre les barres inférieures (2a, 2b),
- que le tube profilé (11) est fixé sur la barre télescopique (10) en tant que support (6) dans la position de glissière arrière dans laquelle le châssis est monté au moyen d'un dispositif de blocage déverrouillable et
- que sur la barre télescopique (10) à l'avant l'élément de roulement (4) est prévu pour l'installation de la roue avant (5),après le déverrouillage du dispositif d'arrêt au moment de faire passer le châssis du chariot de la position d'usage à la position de rangement repliée en faisant glisser le tube profilé (11) sur le tube télescopique (10), les entretoises supérieures (8a, 8b) basculant alors au moins vers l'arrière au-dessus des barres de châssis inférieures (2a, 2b) et les barres de châssis supérieures couplées avec (1a, 1b) basculant en direction du niveau de la barre télescopique (10) et de celui du tube profilé (11).

4. Châssis de chariot selon la revendication 1, 2, ou 3 **caractérisé en ce**la qu'aussi bien les barres de châssis arrières inférieures (2a, 2b) que les barres d'appui (7a, 7b) sont placées de façon à basculer en direction du tube profilé (11) et que les barres de châssis supérieures couplées avec (1a, 1b) sont placées de façon à basculer en direction du niveau de la barre télescopique (10) et de celui du tube profilé (11) contre la barre télescopique (10) ou le tube profilé (11).

5. Châssis de chariot selon la revendication 2 ou 3 **caractérisé en ce**la que les roulements à bascule supérieurs (13) pour les extrémités des entretoises arrières supérieures (8a, 8b) sont prévus contre les barres (1a, 1b) ou contre les barres à glissières (14a, 14b) appuyées avec les couplages à cliquetis (16a, 16b) directement dans la partie inférieure ou contre les bras de roulement (12a, 12b) situés devant vers le bas et fixés contre ceux-ci ou contre les bras du carter des couplages à cliquetis (16a, 16b),
que dans la position montée du châssis les roulements à bascule (13) sont placés devant en face du support à glissière (6) de façon à ce que lors que le support (6) ou le tube profilé (11) est glissé vers l'avant et qu'au moins les entretoises supérieures (8a, 8b) du système d'entretoises (8a, 8b) sont basculées vers l'arrière, le tube profilé (11) peut être glissé automatiquement vers l'avant au-dessus de la barre télescopique, en fonction des longueurs, la barre télescopique (10) restant dans le tube profilé (11) ou restant à l'arrière de celui-ci.

6. Châssis de chariot selon l'une des revendications 2 à 5 **caractérisé en ce**la que les barres de châssis supérieures (1a, 1b) passent au moins jusqu'à l'articulation à bascule (13) des entretoises supérieures (8a, 8b) en forme de parabole, celles-ci étant reliées soit au-dessus de la pièce de raccord (9) ou de façon fixe directement entre elles ou étant appuyées de façon à basculer contre la pièce de raccord (9).

7. Châssis de chariot selon la revendication 2 ou 3 **caractérisé en ce**la que pour rallonger les barres de châssis supérieures passant en biais (1a, 1b) des barres à glissières (14a, 14b) sont prévues dont les extrémités sont des coulisseaux (15) ou sont reliées entre elles pour former un étrier à glissière qui est réalisé de façon fixe ou est séparé au milieu par des articulations ou des couplages à cliquetis de façon à être plié.

8. Châssis de chariot selon la revendication 1, 2 ou 3 **caractérisé en ce**la que le dispositif de blocage présente une dent de blocage qui s'insère dans une exclusion de blocage ou dans une percée de blocage dans la paroi du tube profilé (11) et/ou de la barre télescopique (10).

9. Châssis de chariot selon la revendication 3 **caractérisé en ce**la que les extrémités inférieures des barres de châssis supérieures (1a, 1b) sont reliées entre elles de façon à basculer ou sont appuyées contre la pièce de raccord (9) et/ou que la pièce de raccord (9) est fixée de façon à basculer sur la barre télescopique (10) de telle sorte que lorsque le châssis est plié les barres de châssis (1a, 1b) et les entretoises (8a, 8b), dans la position correspondante sur le support (6) ou sur le tube profilé (11), et les barres de châssis inférieures à l'arrière (2a, 2b) se déplacent en même temps les unes vers les autres avec les barres d'appui (7a, 7b) posées contre elles afin de réduire la largeur du châssis en position de rangement.

10. Châssis de chariot selon la revendication 5 **caractérisé en ce**la que les bras de roulement (12a, 12b) font partie intégrante du carter du couplage à cliquetis (16a, 16b) qui est fixé en haut contre les barres de châssis supérieures (1a, 1b) ou que les bras de roulement (12a, 12b) sont fixés sur les barres à glissières (14a, 14b) dans le côté inférieur, lorsque les barres à glissière (14a, 14b) basculent au-dessus après avoir débloqué le support (6) ou le tube profilé (11), celui-ci glissant automatiquement.

11. Châssis de chariot selon la revendication 4 **caractérisé en ce**la que les entretoises (8a, 8b) et/ou les deux barres d'appui inférieures à l'arrière (2a, 2b) sont appuyées contre le tube profilé (11) de sorte qu'elles basculent les roues arrières (3) l'une vers l'autre lorsque le support (6) glisse vers l'avant.

12. Châssis de chariot selon la revendication 1, 2 ou 3 **caractérisé en ce**la que les entretoises (8a, 8b) et/ou les deux barres de châssis inférieures à l'arrière (2a, 2b) ou les barres d'appui (7a, 7b) sont les bras latéraux d'un support en forme de Y qui est situé avec la colonne médiane de façon à basculer contre le support (6) ou contre le tube profilé (11) sur le haut et/ou sur le bas avec l'extrémité.

13. Châssis de chariot selon la revendication 2 **caractérisé en ce**la que le support (6) est un support divisé composé de deux parties pouvant être glissées indépendamment l'une de l'autre, une partie portant les entretoises supérieures (8a, 8b) ou la colonne médiane du support et la seconde partie supportant les barres d'appui inférieures (7a, 7b), et que les deux parties sont fixées séparément dans la position de montage du châssis ou ensemble sur le tube profilé (11).

14. Châssis de chariot selon la revendication 1, 2, 3 ou 5, **caractérisé en ce**la que la barre télescopique (10) tend lorsqu'elle s'insère dans le tube profilé (11) un ressort mécanique ou un ressort de pression à gaz dans ou contre le tube profilé (11), ce ressort pouvant être bloqué en position tendue et faisant glisser la barre télescopique (10) après le déverrouillage du dispositif de blocage ou agissant dans le tube profilé (11) avec un dispositif d'amortissement, en particulier avec un ressort de pression
situé sur l'axe longitudinal de la barre télescopique (10) qui amortit les forces entrant en action au moment du glissage.

15. Châssis de chariot selon la revendication 2, 3, 5 ou 14 **caractérisé en ce**la que la pièce de raccord (9) est placée sur la barre télescopique (10) ou le tube profilé (11) de façon à glisser sur la longueur et à être bloquée au moins dans une position avant.

16. Châssis de chariot selon l'une des revendications précédentes **caractérisé en ce**la que deux tubes profilés (11) sont prévus en parallèle dans lesquels des barres télescopiques (10) sont placées et peuvent être tirées et glissées séparément ou en ensemble.

17. Châssis de chariot selon la revendication 16 **caractérisé en ce**la que les pièces de raccord (9) et les supports (6) sont fixés ou placés sur les deux barres télescopiques (10) et/ou sur les tubes profilés (11).
